# EUROPEAN PATENT SPECIFICATION

(11) **EP 3 911 778 B1**
(45) Date of publication and mention of the grant of the patent: **15.02.2023**
(21) Application number: 19817749.5
(22) Date of filing: 16.12.2019
(51) Int. Cl.: C23C 2/06, C23C 2/26, C23C 28/02, F16B 13/04, F16B 13/06, F16B 13/12

(54) **EXPANSION ANCHOR WITH DOUBLE COATING INCLUDING A ZINC FLAKE AND/OR ALUMINIUM FLAKE LAYER**
SPREIZANKER MIT DOPPELBESCHICHTUNG MIT EINER ZINKFLOCKEN- UND/ODER ALUMINIUMFLOCKENSCHICHT
GOUJON EXPANSIBLE À REVÊTEMENT DOUBLE COMPRENANT UNE COUCHE DE PAILLETTES DE ZINC ET/OU DE PAILLETTES D'ALUMINIUM

(30) Priority: 18.01.2019 EP 19152502
(43) Date of publication of application: 24.11.2021
(73) Proprietor: Hilti Aktiengesellschaft, 9494 Schaan (LI)
(72) Inventor: TOMANDL, Alexander, 6800 Feldkirch (AT)
(74) Representative: Hilti Aktiengesellschaft Corporate Intellectual Property
(86) International application number: PCT/EP2019/085347
(87) International publication number: WO 2020/148049

(56) References cited:
- EP-A2- 2 025 952
- WO-A1-2018/010952
- Kevin Hany: "Selecting Anchors for Cracked & Non-Cracked Concrete . Ask Rawlplug!", , 22 October 2017 (2017-10-22), pages 1-2, XP055598979, Retrieved from the Internet: URL:https://www.linkedin.com/pulse/selecti ng-anchors-cracked-non-cracked-concrete-as k-rawlplug-hani [retrieved on 2019-06-24]
- Anonymous: "NON-CLEANING AND OPTIMIZED FOR CORROSIVE ENVIRONMENTS Hilti HIT-Z-F and HIT-HY 200 ultimate performance chemical anchor system", Brochure, 2016, XP055375119, Retrieved from the Internet: URL:https://www.hilti.dk/medias/sys_master /documents/heb/9215338184734/HIT-Z-F_Corro sion_Brochure_Brochure_ASSET_DOC_7134488.p df [retrieved on 2017-05-22]

## Description

The invention relates to an anchor bolt according to the preamble of claim 1, having a double coating on its anchor bolt or on its expansion sleeve.

Anchors to be used in cracked concrete usually require both protection against atmospheric corrosion and well-defined tribological properties in their expansion mechanisms. In view of this, anchor bolts with a thin tribological coating applied on top of Zn and/or ZnNi electroplated carbon steel, or on top of stainless steel, have been proposed. The thin tribological coating can provide the tribological properties for operation in cracked concrete. WO18010952 A1, for example, describes an expansion anchor in which the wedge body has a corrosion protection layer, which is either a Zn/Ni-layer or a Zn/Fe layer, and a water-based lacquer lubricating tribological layer covering the corrosion protection layer.

Other expansion anchors having tribological coatings are described in US5176481 A, DE10108844 A1 and US2018180081 A1, wherein US2018180081 A1 discloses double coatings in which the top layer has a coefficient of friction which is greater than the coefficient of friction of the base layer.

WO18114308 A1 describes a method for coating a cold-worked multi-cone anchoring element for chemical fastening technology in such a way that detachment of the anchoring element from the injection mortar is improved and sliding properties and corrosion protection are also improved. The method comprises the steps of i) galvanizing the multi-cone anchoring element, in particular with ZnNi, ii) applying a protective coating, in particular a zinc flake coating, e.g. Tech seal(R) Silver WL4, iv) applying a primer, in particular an organic binder system based on acrylate, and v) applying a top coating, in particular a wax coating.

European Technical Assessment ETA 17/0184 of 14/08/2018 describes an expansion anchor that is coated with a zinc flake coating.

It is an object of the present invention to provide an expansion anchor which has, whilst being particularly easy to manufacture and/or reliable, particularly good performance and durability properties, preferably with respect to outdoor use in cracked concrete.

This objective is achieved by an expansion anchor according to claim 1. The dependent claims describe preferred embodiments.

An inventive anchor is characterized in that the double coating comprises a zinc flake and/or aluminium flake top layer and a hot dip galvanized zinc, a ZnNi or a ZnFe base layer that is covered by the zinc flake and/or aluminium flake top layer. Accordingly, the base layer is a hot dip galvanized zinc layer, a ZnNi layer, in particular an electroplated ZnNi layer, or a ZnFe layer, in particular an electroplated ZnFe layer, and the top layer is a zinc flake and/or aluminium flake layer.

The invention is based on the finding that for outdoor use, in addition to atmospheric corrosion, the effects of wet concrete may also need to be taken into account. Wet concrete can create an alkaline environment. It was found that Zn, ZnNi and/or hot dip galvanized coating layers on carbon steel expansion anchor bolts can, under certain conditions, be attacked by the alkaline environment of wet concrete, potentially leading to delamination of the tribological overlay and therefore to a potential decline in cracked concrete performance over time. Stainless steel could be used instead of Zn, ZnNi and/or hot dip coated carbon steel, but this would often generate higher manufacturing expenses. The adverse alkaline effect of concrete is specific to expansion anchors, and usually absent in chemical anchors embedded in an injection mortar shell, since the injection mortar shell protects the chemical anchor from concrete alkaline effect.

In view of this, a double coating comprising a base layer which is an electroplated ZnNi (zinc nickel) or an electroplated ZnFe (zinc iron) or a HDG (hot dip galvanized zinc) layer, and a top layer which is a zinc flake and/or aluminium flake layer, is proposed on a carbon steel substrate. It was found that this type of double coating can provide particularly good protection against atmospheric corrosion, good tribological properties for a cracked concrete expansion mechanism and good mechanical durability of the cracked concrete expansion mechanism in wet concrete. This combination can preferably allow to use carbon steel elements for outdoor use in cracked concrete. In this connection, the zinc flake and/or aluminium flake coating can advantageously contribute to all of the three items. Being a stable polymer-based corrosion protection coating with metallic flakes, it can provide both sacrificial properties and chemical stability, preferably against alkaline attack in wet concrete environments. In addition, it might also provide the necessary tribological properties required by the expansion mechanism, so that there might be no need for an additional tribological coating. In particular, it can maintain the necessary tribological properties in alkaline conditions found in wet concrete environments. The relatively high hardness of the ZnNi, ZnFe or HDG base layer can mechanically stabilize the top layer, in particular under high loads experienced at the expansion mechanism, efficiently counteracting mechanically induced delaminating, and providing particularly good durability in cracked concrete applications. Moreover, the ZnNi, ZnFe or HDG base layer contributes to atmospheric corrosion resistance, significantly increasing corrosion resistance of anchor parts exposed to the atmosphere.

More preferably, the base layer is a ZnNi layer, in particular an electroplated ZnNi layer. This can be advantageous from a manufacturing point of view. The ZnNi layer comprises significant quantities of Zinc and Nickel. The nickel content in the ZnNi layer is preferably 8 to 18 wt. %, especially 10 to 16 wt. %. If the content is too high, the coating bight be too brittle, which might result in inferior adhesion properties. If the content is too low, corrosion protection might be inferior.

In particular, the zinc flake and/or aluminium flake layer comprises zinc flakes and/or aluminium flakes, preferably both, but possibly also either of them, wherein the flakes are bonded together by a matrix, in particular a polymer matrix. Thus, the zinc flake and/or aluminium flake layer is in particular a non-electrolytically applied coating. The matrix could be organic or inorganic. The material of the zinc flake and/or aluminium flake layer can be in accordance with international standard ISO 10683 and/or European standard EN 13858.

The anchor bolt is an elongate body. The wedge body and the anchor bolt are connected to transfer tensile forces. The wedge body can for example be threaded to the anchor bolt, in particular if the expansion anchor is a so-called sleeve-type expansion anchor. The wedge body can also be tightly fixed to the anchor bolt, in particular if the expansion anchor is a so-called wedge-type expansion anchor. It is particularly preferred in case of a wedge-type expansion anchor that the wedge body and the anchor bolt are integral, i.e. that they form one piece. If the expansion anchor is a wedge-type expansion anchor, the anchor bolt is preferably provided with a forwardly-facing shoulder for expansion sleeve abutment and for advancing the expansion sleeve into the hole.

The expansion sleeve surrounds the anchor bolt, in particular around the longitudinal axis. Preferably, the expansion sleeve is a single piece. However, it could also consist of several individual segments.

The anchor bolt can have, in particular in a rear region of the anchor bolt, a tension-introducing structure. The tension-introducing structure is intended for introducing rearwardly-directed tensile force into the anchor bolt. The tension-introducing structure can for example be a thread, in particular an outer thread, provided on the anchor bolt. Preferably, a nut is screwed onto the thread, which nut can hold attachment parts attached by the anchor. The tension-introducing structure can for example also be a head that forms a maximum cross-section, or a bayonet-type lock.

The wedge body can be preferably located in a front region of the anchor bolt. The wedge body, in particular a converging zone thereof, is intended for expanding the expansion sleeve when the wedge body is moved rearwards with respect to the expansion sleeve, in particular for expanding the expansion sleeve radially with respect to the longitudinal axis. In the converging zone, the wedge body converges, on its lateral surface, towards the rear of the anchor bolt and/or towards the tension-introducing structure, wherein the focus of convergence can preferably be on the longitudinal axis. This can in particular imply that the radial distance of the lateral surface of the wedge body from the longitudinal axis becomes smaller towards the rear of the wedge body. The wedge body can have additional zones, for example a preferably cylindrical transition zone and/or a tip zone. The converging zone can for example be conical, or can have a more complex, for example a convex or concave shape. In particular, the converging zone forms a wedge for the expansion sleeve.

The expansion sleeve can have at least one slit, originating from the front end of the expansion sleeve. The slit can be present for manufacturing reasons, in particular if the expansion sleeve is manufactured by bending a sheet material blank around the anchor bolt. Alternatively, or additionally, the at least one slit can be provided for assisting expansion of the expansion sleeve. Preferably, the expansion sleeve has a plurality of slits originating from the front end of the expansion sleeve, and the expansion sleeve has fingers between neighbouring slits.

The anchor bolt preferably has a neck located adjacent to the wedge body. The neck can, at least partly, accommodate the expansion sleeve before the anchor is installed. The neck is in particular positioned rearwards of the converging zone.

Where the term "longitudinal axis" is used, this should, in particular, refer to the longitudinal axis of the anchor bolt, which is often also the longitudinal axis of the expansion anchor. In accordance with the usual definition, the "longitudinal axis" can in particular be the axis that runs in the longitudinal direction, i.e. in the long direction, of the elongate anchor bolt. Where the terms "radially", "axially" or "circumferentially" are used, this should in particular be understood with respect to the longitudinal axis of the anchor bolt.

The double coating can be provided on the first element or on the second element, i.e. on the expansion sleeve or on the wedge body, respectively. The other of these two elements can also be coated, with an additional single layer coating or an additional multi-layer coating.

At least the element on which the double coating is provided is a carbon steel part, which can in particular imply that this element consists of carbon steel. The other of the first and second elements is preferably also a steel part, more preferably a stainless-steel part.

The double coating is provided at least in the area of contact of the one of the first and second elements, but the double coating can also extend further and can preferably cover the entire surface of said element. If the double coating is provided on the wedge body, it might also extend to the anchor bolt, in particular if the wedge body and the anchor bolt are at least partly integral. All this can be advantageous in view of manufacturing effort.

The top layer overlays the base layer, i.e. the top layer forms a topcoat and the base layer a basecoat, the base layer being located sandwiched between the top layer and the substrate, i.e. the one of the first and second elements. There could be additional layers on top of the layers of the double coating, below the layers of the double coating or between the layers of the double coating, e.g. a coloured paint layer on top or an adhesive layer below. The top layer comprises an inner surface contacting or overlying the base layer and an outer surface facing away from the base layer.

Preferably, the double coating is provided on the wedge body, i.e. on the second element. In this case, the wedge body is a carbon steel part and the area of contact with the other of the first and second elements is the area of contact with the expansion sleeve. Due to the relatively high mass of a typical wedge body, this can be particular advantageous in view of manufacturing expenses, in particular if the wedge body and the anchor bolt are integral. Thus, preferably, the wedge body and the anchor bolt are integral, and the double coating covers all of the surface of the wedge body and of the anchor bolt. The expansion sleeve, i.e. the first element, preferably consists of steel, which might be coated or uncoated. It can, for example, be a stainless-steel part or a coated carbon steel part. Preferably, the expansion sleeve consists of stainless steel, which might be coated or uncoated. This can be advantageous in view of corrosion properties and/or manufacturing expenses.

As already mentioned above, the wedge body and the anchor bolt are preferably integral, and the double coating extends to the anchor bolt. This can further reduce manufacturing effort and provide particularly good durability and reliability of the entire anchor. The wedge body and the anchor bolt can be coated together with the double layer, in one and the same coating steps. Preferably, the double coating covers all of the surface of the wedge body and of the anchor bolt.

It is particularly preferred that the zinc flake and/or aluminium flake top layer of the double coating is uncoated, at least in the area of contact. Thus, there is no additional topcoat on top of the zinc flake and/or aluminium flake top layer, at least in the area of contact, in particular in the area of contact with the expansion sleeve. Since the zinc flake and/or aluminium flake top layer itself can have sufficient tribological properties for a cracked concrete expansion mechanism, this embodiment allows to obtain efficient anchors with particularly low manufacturing effort. If the double layer extends beyond the area of contact, the zinc flake and/or aluminium flake top layer might be uncoated in those regions as well, but additional coatings, such as colour coatings, e.g. to provide optical markings, might also be provided in those regions.

The invention also relates to a method for using, in particular for installing, an inventive expansion anchor, in which the wedge body is moved rearwardly relative to the expansion sleeve, in particular to expand the expansion sleeve. In particular, the invention also relates to a method for using, in particular for installing, an inventive expansion anchor, in which the anchor is inserted into a hole, and the wedge body is, with the anchor located in the hole, in particular with at least the tip of the expansion sleeve located in the hole, moved rearwards relative to the expansion sleeve. Accordingly, the anchor is used and/or installed as intended. Moving the wedge body rearwards relative to the expansion sleeve can preferably be achieved by pulling the anchor bolt, with the wedge body attached, out of the hole or/and by moving the wedge body rearwards relative to the anchor bolt.

Features which are described here in context with the expansion anchor can also be used for the method for using the expansion anchor, and features that are described here in context with the method for using the expansion anchor can as well be used for the expansion anchor.

The invention is explained in greater detail below with reference to preferred exemplary embodiments, which are depicted schematically in the accompanying drawings. Individual features of the exemplary embodiments presented below can be implemented either individually or in any combination within the scope of the present invention.
- Figure 1: shows a longitudinal sectional view of a first embodiment of an expansion anchor that is installed in a concrete substrate;
- Figure 2: shows a magnified schematic view of the expansion anchor of figure 1, in the front region of the anchor, namely in the region marked with a circle in figure 1;
- Figure 3: shows a longitudinal sectional view of an expansion anchor in a modification of the embodiment of figures 1 and 2, the expansion sleeve being omitted for the sake of clarity;
- Figure 4: shows a longitudinal sectional view of a third embodiment of an expansion anchor that is installed in a concrete substrate; and
- Figure 5: shows a magnified schematic view of the expansion anchor of figure 4, in the front region of the anchor, namely in the region marked with a circle in figure 4.

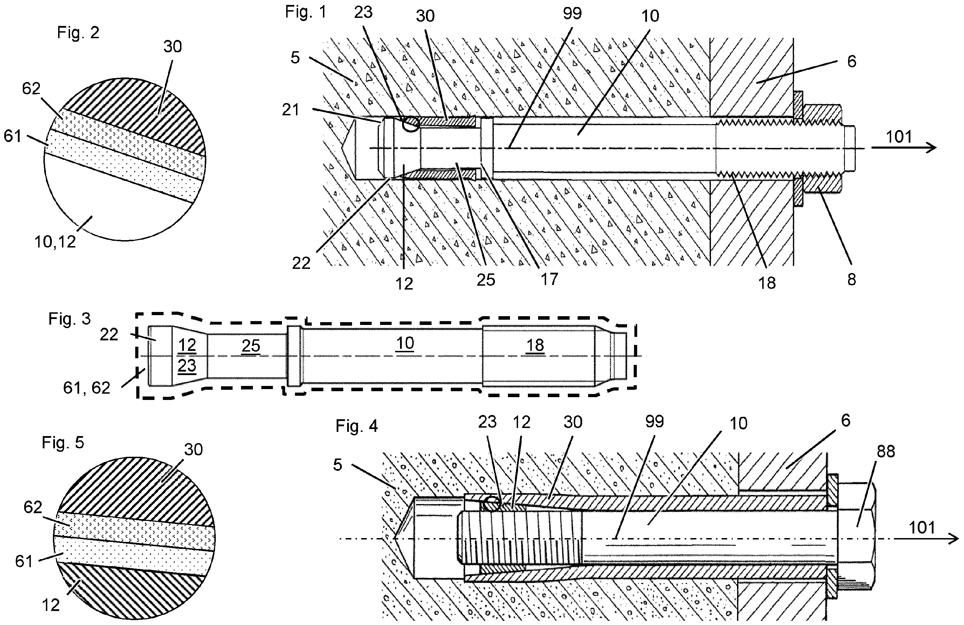

Figures 1 and 2 show a first embodiment of an inventive expansion anchor. The expansion anchor comprises an elongate anchor bolt 10 defining a longitudinal axis 99, an expansion sleeve 30, which surrounds the anchor bolt 10, and a wedge body 12 for the expansion sleeve 30 provided on the anchor bolt 10, namely in the vicinity of the front end of the anchor bolt 10.

The wedge body 12 has a converging zone 23 intended for radially expanding the expansion sleeve 30 when the wedge body 12 is drawn into the expansion sleeve 30 in the rearwards direction 101, i.e. when the wedge body 12 is moved rearwards relative to the expansion sleeve 30 into the expansion sleeve 30. For this purpose, in the converging zone 23, the lateral surface of the wedge body 12 converges towards the rear of the anchor. In the present example, the lateral surface of the wedge body 12 is conical in the converging zone 23, with a focus of convergence on the longitudinal axis 99. However, this is merely an example and other converging designs are also possible.

In the present example, the wedge body 12 also has a transition zone 22, which is located forwards of and adjacent to the converging zone 23, and a tip zone 21, which is located forwards of and adjacent to the transition zone 22. In the transition zone 22, the rearward convergence is smaller as compared to the converging zone 23 or the rearward convergence is even zero, but preferably not reverse, i.e. it is not a forward convergence. In the present example, convergence is absent, i.e. zero, in the converging zone 23 and the wedge body 12 has a cylindrical lateral surface in the converging zone 23, in particular cylindrical with a circular base. In the tip zone 21, the lateral surface of the wedge body 12 converges towards the front end of the anchor.

The anchor bolt 10 has a neck 25, which is located adjacent to and rearwards of the wedge body 12, and in which the anchor bolt 10 has constant cross section. The expansion sleeve 30 surrounds this neck 25, at least before installation the anchor. At the neck 25, the diameter of the anchor bolt 10 can be minimal.

In the present embodiment, the anchor is of the wedge type. The anchor bolt 10 has, at the rearward end of the neck 25, a shoulder 17 facing forwards for axially engaging the expansion sleeve 30 and for advancing the expansion sleeve 30 forwards. The wedge body 12 is connected to the anchor bolt 10 in an axially fixed manner and in the present case, the wedge body 12 is, by way of example, integral with the anchor bolt 10.

In a rear region of the anchor bolt 10, the anchor bolt 10 is provided with an outer thread 18, which provides a tension-introducing structure for introducing rearwardly-directed tension into the anchor bolt 10. A nut 8 can be threadedly engaged on the outer thread 18.

The expansion sleeve 30 can be provided with a plurality of slits (not shown), which originate from the front end of the expansion sleeve 30 and extend towards the rear end of the expansion sleeve 30.

When the anchor is installed, the anchor bolt 10 and the wedge body 12 are pushed, front end first and, into a hole in a substrate 5. In this process, the anchor bolt 10 and the wedge body 12 are moved parallel to the longitudinal axis 99 in the forwards direction, i.e. in the direction opposite to the rearwards direction 101. The shoulder 17 engages the expansion sleeve 30, so that the expansion sleeve 30 follows the movement of the anchor bolt 10. Subsequently, the wedge body 12 is drawn into the front-end region of the expansion sleeve 30, by moving the wedge body 12 relative to the expansion sleeve 30 in the rearwards direction 101. In the present embodiment, this is achieved by pulling the anchor bolt 10 together with the wedge body 12 rearwardly, in particular by tightening the nut 8 provided on the outer thread 18 of the anchor bolt 10. When the wedge body 12 is drawn into the front-end region of the expansion sleeve 30, the expansion sleeve 30 is radially widened by wedge body 12 and is pressed against the wall of the hole. The expansion anchor is fixed in substrate 5 as a result of this mechanism. The installed state of the expansion anchor, in which it is fixed in substrate 5, is shown in Figure 1. A mounting part 6 may be fixed to the substrate 5 with the aid of nut 8.

In an area of contact with the expansion sleeve 30, which area of contact is formed on the converging zone 23 of the wedge body 12, the wedge body 12 is covered by a double coating comprising a base layer 61 and a top layer 62 that covers the base layer 61. This double coating is shown in figure 2. The base layer 61 is located sandwiched between the top layer 62 and the wedge body 12 that carries the two layers 61, 62, in particular in an adhesively bound manner. The base layer 61 is a hot dip galvanized zinc layer, a ZnFe layer or a ZnNi layer, and the top layer 62 is zinc flake and/or aluminium flake layer. The wedge body 12, and preferably also the anchor bolt 10, consists of carbon steel. The expansion sleeve 30 can for example consist of stainless steel, or of coated carbon steel.

In the exemplary embodiment of figures 1 and 2, the double coating consisting of layers 61 and 62 is shown to be located on the wedge body 12. However, the double coating having layers 61 and 62 may additionally extend into neck area 11, or beyond. In particular, the double coating can cover all of the surface of the wedge body 12 and of the anchor bolt 10. Such an embodiment is shown in figure 3, in which the double coating is indicated, in a strongly magnified manner, by dashed lines. The expansion sleeve is omitted in figure 3 for the sake of clarity, in order to highlight the double layer. An expansion sleeve to be used in the embodiment of figure 3 can for example be chosen in analogy to that of figures 1 and 2.

The expansion anchors in the exemplary embodiments of figures 1 to 3 are of the "wedge anchor" type. Another exemplary embodiment, in which the expansion anchor is of the "sleeve anchor" type, is shown in figures 4 and 5. In the embodiments of figures 1 to 3, the respective wedge bodies 12 are axially fixedly fastened to the anchor bolt 10 and in particular integral with the anchor bolt 10. In contrast, in the exemplary embodiment of figures 4 and 5, the wedge body 12 can be axially displaced relatively to the anchor bolt 10. In particular, the wedge body 12 with the converging zone 23 has an internally threaded hole, and the anchor bolt 10 has a corresponding outer thread. The corresponding threads form a transmission mechanism, which can translate rotation of the anchor bolt 10 relative to the wedge body 12 into axial displacement of the wedge body 12 relative to the anchor bolt 10. In addition, in the expansion anchor of figures 4 and 5, the expansion sleeve 30, which may also consist of several tubular pieces, extends to the mouth of the hole, and a widened head 88 is rotatably fixed to the anchor bolt 10 at the rear end area of the anchor bolt 10.

For installing the expansion anchor of figures 4 and 5, the anchor bolt 10 is set in rotation around longitudinal axis 99, preferably via the head 88. The corresponding threads convert this rotational movement of the anchor bolt 10 into an axial movement of the wedge body 12 relative to the anchor bolt 10 and thus relative to the expansion sleeve 30, resulting in the wedge body 12 being drawn into the expansion sleeve 30.

The expansion anchor of figures 4 and 5 has once again a double coating comprising a base layer 61 and a top layer 62, which double coating covers the wedge body 12, at least in an area of contact with the expansion sleeve 30, which area of contact is located on the converging zone 23 of the wedge body 12. The base layer 61 is a hot dip galvanized zinc layer, a ZnFe layer or a ZnNi layer, and the top layer 62 is zinc flake and/or aluminium flake layer. The wedge body 12, and preferably also the anchor bolt 10, consists of carbon steel. The expansion sleeve 30 can for example consist of stainless steel, or of coated carbon steel.

## Claims

1. Expansion anchor having
- an anchor bolt (10),
- an expansion sleeve (30), as a first element, wherein the expansion sleeve (30) surrounds the anchor bolt (10),
- a wedge body (12), as a second element, for expanding the expansion sleeve (30), wherein the wedge body (12) is provided on the anchor bolt (10), and
- a double coating that is provided on one of the first and second elements at least in an area of contact with the other of the first and second elements,
- wherein the element, on which the double coating is provided, is a carbon steel part, **characterized in that**
- the double coating comprises a zinc flake and/or aluminium flake top layer (62) and a hot dip galvanized zinc, a ZnNi or a ZnFe base layer (61) that is covered by the zinc flake and/or aluminium flake top layer (62).

2. Expansion anchor according to claim 1,
**characterized in that**
the double coating is provided on the wedge body (12).

3. Expansion anchor according to claim 2,
**characterized in that**
the expansion sleeve (30) consists of steel.

4. Expansion anchor according to claim 3,
**characterized in that**
the expansion sleeve (30) consists of stainless steel.

5. Expansion anchor according to any of claims 2 to 4,
**characterized in that**
the wedge body (12) and the anchor bolt (10) are integral, and
the double coating extends to the anchor bolt (10).

6. Expansion anchor according to claim 5,
**characterized in that**
the double coating covers all of the surface of the wedge body (12) and of the anchor bolt (10).

7. Expansion anchor according to any of the preceding claims,
**characterized in that**
the zinc flake and/or aluminium flake top layer (62) of the double coating is uncoated, at least in the area of contact.

8. Method for using an expansion anchor according to any of the preceding claims, in which
- the wedge body (12) is moved rearwards relative to the expansion sleeve (30) to expand the expansion sleeve (30).

## Patentansprüche

1. Spreizanker, der aufweist
- einen Ankerbolzen (10),
- eine Spreizhülse (30), als ein erstes Element, wobei die Spreizhülse (30) den Ankerbolzen (10) umgibt,
- einen Keilkörper (12), als ein zweites Element, zum Spreizen der Spreizhülse (30), wobei der Keilkörper (12) an dem Ankerbolzen (10) bereitgestellt ist, und
- eine Doppelbeschichtung, die auf einem von dem ersten und dem zweiten Element mindestens in einem Kontaktbereich mit dem anderen des ersten und des zweiten Elements bereitgestellt ist,
- wobei das Element, auf dem die Doppelbeschichtung bereitgestellt ist, ein Kohlenstoffstahlteil ist,
**dadurchgekenzeichnet, dass**
- die Doppelbeschichtung eine Zinklamellen- und/oder Aluminiumlamellendeckschicht (62) und ein feuerverzinktes Zink, eine ZnNi- oder eine ZnFe-Basisschicht (61) umfasst, die durch die Zinklamellen- und/oder Aluminiumlamellendeckschicht (62) bedeckt ist.

2. Spreizanker nach Anspruch 1,
**dadurchgekenzeichnet, dass**
die Doppelbeschichtung auf dem Keilkörper (12) bereitgestellt ist.

3. Spreizanker nach Anspruch 2,
**dadurchgekenzeichnet, dass**
die Spreizhülse (30) aus Stahl besteht.

4. Spreizanker nach Anspruch 3,
**dadurchgekenzeichnet, dass**
die Spreizhülse (30) aus Edelstahl besteht.

5. Spreizanker nach einem der Ansprüche 2 bis 4,
**dadurchgekenzeichnet, dass**
der Keilkörper (12) und der Ankerbolzen (10) einstückig sind und sich die Doppelbeschichtung zu dem Ankerbolzen (10) erstreckt.

6. Spreizanker nach Anspruch 5,
**dadurchgekenzeichnet, dass**
die Doppelbeschichtung die gesamte Oberfläche des Keilkörpers (12) und des Ankerbolzens (10) bedeckt.

7. Spreizanker nach einem der vorstehenden Ansprüche,
**dadurchgekenzeichnet, dass**
die Zinklamellen- und/oder Aluminiumlamellendeckschicht (62) der Doppelbeschichtung mindestens in dem Kontaktbereich unbeschichtet ist.

8. Verfahren zum Verwenden eines Spreizankers nach einem der vorstehenden Ansprüche, in dem
- der Keilkörper (12) relativ zu der Spreizhülse (30) nach hinten bewegt wird, um die Spreizhülse (30) zu spreizen.

## Revendications

1. Cheville à expansion ayant
- un boulon d'ancrage (10),
- un manchon d'expansion (30), en tant que premier élément, le manchon d'expansion (30) entourant le boulon d'ancrage (10),
- un corps de coin (12), en tant que second élément, pour dilater le manchon d'expansion (30), le corps de coin (12) étant fourni sur le boulon d'ancrage (10), et
- un revêtement double qui est prévu sur l'un des premier et second éléments au moins dans une zone de contact avec l'autre des premier et second éléments,
- l'élément, sur lequel le double revêtement est fourni, étant une pièce en acier au carbone,
**caractérisée en ce que**
- le double revêtement comprend une couche supérieure de flocons de zinc et/ou de flocons d'aluminium (62) et un zinc galvanisé par immersion à chaud, une ZnNi ou une couche de base de ZnFe (61) qui est recouverte par la couche supérieure de flocons de zinc et/ou de flocons d'aluminium (62).

2. Cheville d'expansion selon la revendication 1,
**caractérisée en ce que**
le revêtement double est fourni sur le corps de coin (12).

3. Cheville d'expansion selon la revendication 2,
**caractérisée en ce que**
le manchon d'expansion (30) est constitué d'acier.

4. Cheville d'expansion selon la revendication 3,
**caractérisée en ce que**
le manchon d'expansion (30) est constitué d'acier inoxydable.

5. Cheville d'expansion selon l'une quelconque des revendications 2 ou 4,
**caractérisée en ce que**
le corps de coin (12) et le boulon d'ancrage (10) sont solidaires, et le revêtement double s'étend jusqu'au boulon d'ancrage (10).

6. Cheville d'expansion selon la revendication 5,
**caractérisée en ce que**
le double revêtement recouvre la totalité de la surface du corps de coin (12) et du boulon d'ancrage (10).

7. Cheville d'expansion selon l'une quelconque des revendications précédentes,
**caractérisée en ce que**
la couche supérieure de flocons de zinc et/ou de flocons d'aluminium (62) du revêtement double est non revêtue, au moins dans la zone de contact.

8. Procédé d'utilisation d'une cheville à expansion selon l'une des revendications précédentes, dans lequel
- le corps de coin (12) est déplacé vers l'arrière par rapport au manchon d'expansion (30) pour dilater le manchon d'expansion (30).
